# EUROPÄISCHE PATENTSCHRIFT

(11) **EP 3 652 379 B1**
(45) Veröffentlichungstag und Bekanntmachung des Hinweises auf die Patenterteilung: **28.04.2021**
(21) Anmeldenummer: 18731421.6
(22) Anmeldetag: 13.06.2018
(51) Int. Cl.: D21F 3/02

(54) **PRESSMANTEL UND DESSEN VERWENDUNG SOWIE SCHUHPRESSWALZE UND SCHUHPRESSE**
PRESS SLEEVE AND USE THEREOF, AND SHOE PRESS ROLL AND SHOE PRESS
MANCHON DE PRESSE ET SON UTILISATION AINSI QUE ROULEAU DE PRESSE À SABOT ET PRESSE À SABOT

(30) Priorität: 12.07.2017 DE 102017115591
(43) Veröffentlichungstag der Anmeldung: 20.05.2020
(73) Patentinhaber: Voith Patent GmbH, 89522 Heidenheim (DE)
(72) Erfinder: DELMAS, Delphine, 89522 Heidenheim (DE)
(74) Vertreter: Voith Patent GmbH - Patentabteilung
(86) Internationale Anmeldenummer: PCT/EP2018/065579
(87) Internationale Veröffentlichungsnummer: WO 2019/011558

(56) Entgegenhaltungen:
- EP-A1- 2 284 314
- EP-A1- 3 101 174
- US-A1- 2015 308 044

## Beschreibung

Die Erfindung geht aus von einem Pressmantel, insbesondere für eine Pressvorrichtung zur Behandlung einer Faserstoffbahn, z.B. zu deren Glättung oder Entwässerung, sowie einer Schuhpresse und der Verwendung eines solchen Pressmantels, im Einzelnen gemäß den unabhängigen Ansprüchen.

Pressenvorrichtungen, wie Schuhpressen, sind seit langem Bestandteil moderner Papiermaschinen. Sie umfassen im Wesentlichen einen stationär angeordneten Schuh (auch Pressschuh genannt), welcher sich in einer Maschinenquerrichtung erstreckt und einen um den stationären Schuh umlaufenden Pressmantel. Letzter ist verformbar und nimmt im Betrieb im Wesentlichen eine rohrförmige Form an. Der Schuh ist so geformt, dass er mit einer Gegenwalze einen Pressnip (Pressspalt) bildet. Der Pressnip ist durch die Anlagefläche der Gegenwalze im Schuh definiert. Der Schuh ist beweglich ausgeführt und kann an die Gegenwalze bewegt werden.

An den Pressmantel werden enorme Anforderungen in Bezug auf seine Stabilität gestellt, nämlich hinsichtlich Oberflächenhärte, Beständigkeit gegen Druck, Temperatur und Hydrolyse. Der Pressmantel ist zudem während des Betriebs starken Biegewechselbelastungen ausgesetzt. Beim Einlaufen am Schuhrand - in Drehrichtung des Pressmantels gesehen vor dem Pressnip - erfolgt zunächst eine Biegung unter einem verhältnismäßig kleinen Radius. Diese geht sofort in eine gegenläufige Biegung beim Durchlaufen des Pressnips über. Beim Auslaufen am anderen Schuhrand, also - in Drehrichtung des Pressmantels gesehen nach dem Pressnip - erfolgt wieder eine gegenläufige Biegung. Diese Verformung des Pressmantels beim Ein- und Auslaufen wird auch als Wechselnip bezeichnet. Es ist leicht ersichtlich, dass die Neigung des Pressmantels, besonders an dieser Stelle zu brechen, durch die hohe mechanische Beanspruchung sehr groß ist. Entsprechend sind aus dem Stand der Technik viele Maßnahmen bekannt, die die Stabilität des Pressmantels erhöhen sollen.

Im Bereich der Materialien werden für Pressmäntel in zunehmendem Maße moderne Polymere, wie beispielsweise Polyurethane verwendet. Diese erlauben durch eine geeignete Zusammensetzung die Herstellung von Pressmänteln mit hoher Flexibilität und dabei großer Stabilität.

Bisherige aus dem Stand der Technik bekannte Polyurethane sind jedoch bis heute nicht im Stande in jedem Einsatzfall eine für den Kunden zufriedenstellende Stabilität und Lebensdauer zu erzielen. Auch bei der Herstellung der Pressmäntel haben diese Werkstoffe Nachteile. Einerseits war die Einstellung der Viskosität des Reaktionsgemisches aus Präpolymers und Vernetzer problematisch. Wurden bisher dickere Einzelschichten pro Beschichtungsdurchgang der Polymerschicht gewünscht, so war dies nicht möglich. Vielmehr musste ein zweiter Beschichtungsdurchgang erfolgen. Andererseits ergaben sich oft Einschlüsse in Form von Luftblasen, sobald die Verstärkungsstruktur z.B. in Form von Fäden, mit dem Werkstoff umgossen wurde. Auch in Schichten ohne Verstärkungsstruktur können solche Luftblasen entstehen. Problematisch an Luftblasen ist, dass diese oftmals zum vorzeitigen Ausfall des Pressmantels im Betrieb führen.

Gattungsgemäße Pressmäntel sind unter anderem bekannt geworden aus EP2284314A1, EP 2248944 A1und US 2015/0308044 A1.

Das Dokument EP2284314A1 offenbart einen Pressmantel für eine Schuhpresswalze umfassend eine Polymerschicht, wobei die Polymerschicht ein Polyurethan enthält oder aus diesem hergestellt ist, wobei das Polyurethan aus einen Präpolymer und einem Vernetzer gebildet ist, und das Präpolymer ein Reaktionsprodukt aus 1,4-Phenylendiisocyanat (PPDI) und wenigstens einem Polyol ist.

Die vorliegende Erfindung betrifft derartige eingangs genannte, gattungsgemäße Gegenstände.

Es ist entsprechend Aufgabe der Erfindung, einen Pressmantel, eine Schuhpresse und eine Verwendung eines solchen Pressmantels in einer Schuhpresse anzugeben, welcher/welche die Nachteile des Standes der Technik vermeidet. Insbesondere liegt die Aufgabe darin, einen Pressmantel anzugeben, der eine gegenüber den aus dem Stand der Technik bekannten Pressmänteln erhöhte Stabilität und Lebensdauer aufweist.

Die Aufgabe wird durch die Merkmale der unabhängigen Ansprüche gelöst. Besonders bevorzugte und vorteilhafte Ausführungsformen der Erfindung sind in den Unteransprüchen wiedergegeben.

Die Erfinderin hat erkannt, dass sich die der Erfindung zugrunde liegende Aufgabe durch die Verwendung wenigstens eines Polyols, enthaltend Caprolacton und Carbonat, wie einem Polycaprolacton-Polycarbonat-Polyol besonders gut lösen lässt. Wenigstens ein Polyol bedeutet, dass neben dem genannten Polyol auch noch weitere Polyole, also ein Blend (Mischung) von (unterschiedlichen) Polyolen vorliegen kann.

Unter einem Polycaprolacton-Polycarbonat-Polyol wird ein Copolymer, zumindest (Poly-)Carbonat- und (Poly-) Caprolacton-Blöcke, also Monomereinheiten enthaltend, verstanden. Der Begriff zumindest bedeutet, dass neben genau diesen beiden beschriebenen Monomereinheiten auch weitere Monomereinheiten zu einem entsprechenden Copolymer zusammengesetzt sein könnten. Bei drei voneinander unterschiedlichen Monomereinheiten würde sich dann ein tertiäres Copolymer ergeben. Bevorzugt weist das Polyol genau zwei Hydroxyl-Gruppen auf. Die Molekülmasse eines solchen Polyols kann zwischen 1000 - 4000 g/mol betragen.

Copolymere im Sinne der vorliegenden Erfindung sind Polymere, die aus zwei oder mehr verschiedenartigen Monomereinheiten zusammengesetzt sind. Damit bilden sie den Gegensatz zu Homopolymeren. Copolymere werden herkömmlich in fünf Klassen unterteilt. Nachfolgend werden die Klassen beispielhaft anhand eines binären Copolymers, das aus zwei verschiedenen Monomereinheiten A und B aufgebaut ist, erörtert. Bei statistische Copolymeren, ist die Verteilung der beiden Monomeren in der Kette zufällig ist, z.B.: (-AABABBBABAABBBABBABAB-). Gradientcopolymere, sind ähnlich zu den statistischen Copolymeren, jedoch nimmt der Anteil der einen Monomereinheit im Verlauf der Kette zu- und der anderen ab, z.B.: (-AAAAAABAABBAABABBBAABBBBBB-).Hingegen wechseln sich bei alternierenden Copolymeren, die beiden Monomereinheiten untereinander ab: (-ABABABABABABABABABAB-). Blockcopolymeren umfassen längere, zusammenhängende Blöcke einer jeweiligen Monomereinheit: (-AAAAAAAAABBBBBBBBBBBB-). Schließlich sind bei Pfropfcopolymeren Blöcke eines Monomers auf das Gerüst (Rückgrat) eines anderen Monomers aufgepfropft. Dabei kann gemäß der Erfindung die Monomereinheit A ein Caprolacton und die Monomereinheit B ein Carbonat darstellen, sodass sich ein entsprechendes - in diesem Fall binäres - Copolymer ergibt. Das eben zu den Copolymeren Gesagte gilt auch für Copolymere, die aus mehr als zwei Monomereinheiten (A und B) sind, also z.B. aus drei (A, B und C) oder mehr (unterschiedlichen) Monomereinheiten.

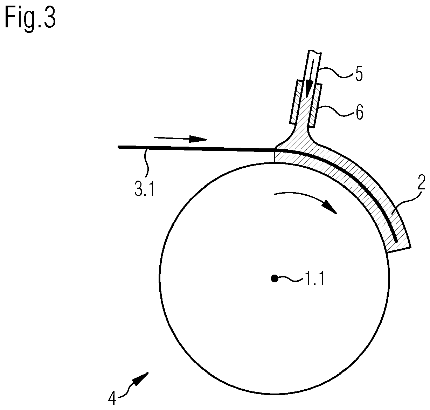

Wird bevorzugt ein Vernetzer umfassend ein Diamin und einen Kohlensäureester, wie Propylencarbonat oder Ethylencarbonat eingesetzt, so werden die erfindungsgemäßen Vorteile besonders zufriedenstellend umgesetzt. Die Zugabe eines Kohlensäureesters zum Vernetzer bei der Herstellung eines Polyurethan enthaltenden Pressmantels, besonders nach dem Verfahren, das in der Figur 3 beschrieben ist, ist äußerst unüblich. Denn für gewöhnlich wird dieser als Lösungsmittel in der Kunststoffindustrie für Zwecke eingesetzt, die außerhalb der Polyurethanherstellung liegen. Es zeigte sich überraschenderweise, dass das Präpolymer-Vernetzer-Gemisch eine geringere Viskosität mit zugleich optimaler Topfzeit aufwies. Damit kann das sich ergebende, zunächst niedrigviskose Polymer die Verstärkungsstruktur (z.B. aus Fäden) besonders gut durchtränken, bevor es sich infolge der Aushärtung verfestigt. Auch können besonders raue Untergründe benetzt werden. In beiden Fällen können Luftblasen in der Zeit sehr gut entweichen. Gemäß der Erfindung können daher nahezu blasenfreie Pressmäntel mittels Rotationsguss hergestellt werden, die bis zu 40 mm dicke Polymerschichten - die in einem Beschichtungsdurchgang, also monolithisch herstellbar sind - ermöglichen. Besonders im Zusammenspiel mit PPDI als Isocyanat ergeben sich zudem sehr vorteilhafte mechanische, wie dynamische Eigenschaften des Pressmantels, eine geringe Quellung sowie eine hervorragende Beständigkeit gegen Hydrolyse.

Wenn gemäß der vorliegenden Erfindung die Rede von einem Isocyanat ist, dann ist damit ein Polyisocyanat, wie Diisocyanat gemeint.

Im Sinne der Erfindung ist mit einer Pressvorrichtung eine Schuhpresse z.B. zur Entwässerung oder Behandlung, wie Glättung einer Faserstoffbahn gemeint. Die Schuhpresse umfasst eine Schuhpresswalze und eine Gegenwalze, die zusammen einen Pressnip ausbilden oder begrenzen. Die Schuhpresswalze umfasst ferner einen umlaufenden Pressmantel und ein stehendes Presselement, den sogenannten Pressschuh. Letzterer stützt sich auf einem tragenden, ebenfalls stehenden Joch ab - beispielsweise über hydraulische Presselemente - und wird an den umlaufenden Pressmantel angedrückt. Der Pressmantel umläuft relativ zu dem feststehenden Pressschuh und Joch und wird dadurch im Pressnip an die Gegenwalze gepresst. Pressschuh und Joch sind radial innerhalb des Pressmantels angeordnet. Unter dem Begriff stehend wird verstanden, dass das Presselement nicht relativ zu der Schuhpresswalze oder der Gegenwalze umläuft, sich jedoch translatorisch - auf die Gegenwalze zu und von ihr weg, bevorzugt in Radialrichtung dieser - und damit relativ zu der Gegenwalze bewegen kann. Zusätzlich zur Faserstoffbahn und dem Pressmantel können ein oder mehrere in Umfangsrichtung endlos umlaufende Pressfilze und/oder weitere endlos umlaufende Pressbänder durch den Pressnip der Schuhpresse geführt werden. Eine solche Schuhpresse kann selbstverständlich mehr als einen Pressnip umfassen.

Unter einer Faserstoffbahn im Sinne der Erfindung ist ein Gelege bzw. Gewirre von Fasern, wie Holzfasern, Kunststofffasern, Glasfasern, Kohlenstofffasern, Zusatzstoffen, Additiven oder dergleichen zu verstehen. So kann die Faserstoffbahn beispielsweise als Papier-, Karton- oder Tissuebahn ausgebildet sein. Sie kann im Wesentlichen Holzfasern umfassen, wobei geringe Mengen anderer Fasern oder auch Zusatzstoffe und Additive vorhanden sein können. Dies bleibt je nach Einsatzfall dem Fachmann überlassen.

Unter einem Pressmantel im Sinne der Erfindung ist ein Band, Schlauch oder ein Mantel zu verstehen, das/der wie dargestellt, zusammen mit einer Faserstoffbahn durch den Pressnip einer Schuhpresse geführt wird. Zur Entwässerung der Faserstoffbahn kann im bestimmungsgemäßen Betrieb die radial äußerste Oberfläche (Polymerschicht) des Pressmantels mit einem Pressfilz in Kontakt kommen, von dem die zu entwässernde Faserstoffbahn direkt getragen wird. Je nach Ausführungsform der Presseinrichtung kann z.B. zur Glättung dieser der Pressmantel im bestimmungsgemäßen Betrieb auch direkt mit der Faserstoffbahn in Kontakt kommen. Der Pressmantel ist dabei als ein in Umfangsrichtung um dessen Längsachse endloser, geschlossener Mantel (Schlauch) ausgeführt. An seinen axialen Enden ist er - in Breitenrichtung gesehen (entlang der Längsachse) - offen. Damit kann der Pressmantel an diesen axialen Enden von zwei seitlichen Spannscheiben gehalten werden, um die Schuhpresswalze zu bilden. Anstatt der Führung durch die beiden seitlichen Spannscheiben kann der Pressmantel, wie es bei offenen Schuhpressen der Fall ist, über den Pressschuh und mehrere Leitwalzen geführt werden. Unabhängig davon, ob der Pressmantel von den Spannscheiben oder den Leitwalzen geführt ist, gelangt der Pressschuh (bzw. die Leitwalzen) mit einem Teil der radial innersten Oberfläche des Pressmantels (zeitweise) in Kontakt. Die radial äußerste Oberfläche eines solchen Pressmantels, also z.B. die radial äußerste Polymerschicht desselben kann mit Rillen und/oder Blindbohrungen versehen sein.

Der Pressmantel kann teilweise oder vollständig aus einem Polymer hergestellt sein. Als Polymer kann dabei ein gießbares, aushärtbares, bevorzugt elastomeres Polymer wie Polyurethan eingesetzt werden. Das Polymer kann folglich als Gießelastomer eingestellt sein.

Mit Polymerschicht ist eine Schicht gemeint, die ein solches gießbares, aushärtbares, bevorzugt elastomeres Polymer umfasst oder vollständig daraus hergestellt ist. Bevorzugt kann die Polymerschicht eine einteilig durch Urformen hergestellte, ausgehärtete Schicht sein. Anders ausgedrückt ist diese monolithisch urgeformt, also durch z.B. Gießen hergestellt. Der Begriff einteilig schließt auch Fälle ein, in denen die eine Schicht wiederum beim Gießen des Polymers aus mehreren Lagen gleichen Materials hergestellt wurde. Dies jedoch nur insoweit wie diese Lagen nach dem Aushärten im Wesentlichen nicht mehr sichtbar sind, sondern sich eine einzige, bevorzugt einheitliche Schicht ergibt. Selbiges gilt entsprechend für den fertigen Pressmantel.

Bei Vorsehen mehrerer Polymerschichten können diese in Radialrichtung gesehen - zumindest abschnittsweise über die Breite des Pressmantels - übereinander angeordnet sein. Zumindest abschnittsweise über der Breite des Pressmantels bedeutet, dass der Pressmantel z.B. an dessen axialen Enden nur einschichtig ist, wohingegen er zwischen den axialen Enden zwei- oder mehrschichtig ausgebildet ist. Die Polymerschichten können sich jedoch auch über die gesamte Breite des Pressmantels erstrecken. Auch kann die Dicke des Pressmantels - und somit die Dicke der einzelnen Polymerschichten - in einem Schnitt durch dessen Längsachse abschnittsweise entlang der Längsachse variieren. So kann z.B. die radial äußerste Polymerschicht im Bereich der Breitenränder des Pressmantels geringer sein als in der Mitte des Pressmantels. Anders ausgedrückt kann im Bereich der Breitenränder die radial äußerste Polymerschicht weniger dick sein als eine radial innere oder radial innerste Polymerschicht. Bevorzugt ist/sind genau eine, zwei oder drei Polymerschichten vorgesehen. Diese können hinsichtlich ihres Polymers identisch ausgeführt sein oder hinsichtlich ihrer Härte oder Stöchiometrie des Präpolymers variieren. Eine Gesamtdicke des fertigen Pressmantels in einem Schnitt durch die Längsachse desselben in Radialrichtung gemessen kann 5 bis 10 mm, bevorzugt 5 bis 7, besonders bevorzugt 5 bis 6 mm betragen. Gemäß der Erfindung kann bei Vorsehen einer einzigen Schicht der Pressmantel aus nur einem Guss, d.h. monolithisch hergestellt sein, sodass die einzige Schicht die eben genannte Dicke aufweist.

Ein fertiger Pressmantel im Sinne der Erfindung ist ein solcher, dessen wenigstens eine Polymerschicht ausgehärtet und abschließend bearbeitet, also für den eingangs genannten Zweck in z.B. einer Schuhpresse einsatzbereit ist. Analog ist mit fertiger Polymerschicht eine Schicht gemeint, die ausgehärtet ist.

Grundsätzlich ist es denkbar, dass der Pressmantel eine Verstärkungsstruktur aufweist. Mit dem Begriff Verstärkungsstruktur im Sinne der Erfindung ist eine Verstärkung der wenigstens einen, das Polymer enthaltenden oder aus diesem bestehenden Schicht - also der Polymerschicht - gemeint. Dabei kann die Verstärkungsstruktur vollständig in die Polymerschicht eingebettet sein, sodass die Verstärkungsstruktur nicht über die Begrenzung der Polymerschicht hinausgeht. Anders ausgedrückt übernimmt die Polymerschicht die Rolle einer Matrix, welche die Verstärkungsstruktur umgibt und infolge von Adhäsions- oder Kohäsionskräften an die Matrix bindet. Eine solche Verstärkungsstruktur kann Verstärkungsstrukturen, wie textile Liniengebilde - z. B. Garne oder Zwirne - und/oder textile Flächengebilde - wie z. B. Gewebe, Gewirke, Gestricke, Geflechte oder Gelege - umfassen und aus einem entsprechenden Ausgangsmaterial, z.B. durch Wickeln herstellbar sein. Unter Ausgangsmaterial wird jenes Material oder Halbzeug verstanden, mittels dem die Verstärkungsstruktur des erfindungsgemäßen fertigen Pressmantels hergestellt wird. Das Ausgangsmaterial bildet damit nach Einbettung in die entsprechende Polymerschicht die Verstärkungsstruktur des erfindungsgemäßen fertigen Pressmantels aus.

Wenn im Sinne der Erfindung davon die Rede ist, dass der Vernetzer zumindest zwei Komponenten umfasst, so sind darunter Ausführungsbeispiele zu verstehen, die genau zwei, genau drei, genau vier oder genau fünf oder mehr als fünf Komponenten umfassen. Gemäß der Erfindung soll der Vernetzer aus zumindest zwei Komponenten hergestellt sein. Selbstverständlich können die Prozentanteile der zwei, drei, vier, fünf oder mehr Komponenten so gewählt sein, dass genau zwei, drei, vier, fünf oder mehr Komponenten vorliegen. Die Prozentanteile jeder der zumindest zwei Komponenten des Vernetzers können so gewählt werden, dass sie in ihrer Gesamtsumme nicht über 100 Gew.-% hinausgehen.

Grundsätzlich wäre es denkbar, dass der Vernetzer eine dritte Komponente (K3) aufweist, welche ausgewählt ist aus wenigstens einem Polyol, bevorzugt bifunktionellem Polyol, dessen Molekulargewicht bevorzugt 1.000 bis 4.000 g/mol beträgt, wie Polyesterpolyol, insbesondere Polycaprolactonpolyol; Polyetherpolyole, insbesondere Polytetramethylenetherglycol (PTMEG), Polypropylenglycol (PPG), Polyethylenglycol (PEG) Polyhexamethylenetherglycol, Polycarbonatpolyol, Polyethercarbonatpolyol, Polybutadienepolyol, Perfluoropolyetherpolyol, Silikonpolyol oder Mischungen daraus.

Auch wäre es alternativ denkbar, dass zusätzlich zu den drei eben genannten Komponenten auch eine vierte Komponente (K4) hinzukommt, die einen Katalysator umfasst oder von diesem gebildet wird, wobei die vierte Komponente (K4) ausgewählt ist aus tertiären Aminen, wie 1,4-Diazabicyclo(2.2.2)octan (DABCO), Triethylamin, Metallverbindungen, organometallischen Verbindungen - z.B. umfassend oder enthaltend Bismuth, wie Bismuth-Neodecanoat, Quecksilber, Aluminium, Zirconium, Eisen, Kalzium, Natrium, Kalium, Blei, Zinn, Titan - oder Mischungen aus den vorgenannten Stoffen. Mittels eines Katalysators kann grundsätzlich die Reaktionsgeschwindigkeit der Vernetzung - und damit der Herstellprozess des Pressmantels - besser gesteuert werden, wenn ein solcher dem Vernetzer zugemischt wird. Durch den Zusatz der Wasserstoffatome tragenden aktiven Moleküle kann gemäß der Erfindung der Anteil des Katalysators reduziert werden. Daher wäre es grundsätzlich denkbar, auf die Komponente K4, also den Katalysator zu verzichten.

Dennoch werden besonders gute Ergebnisse, die die eingangs genannten Vorteile mehr als zufriedenstellend erfüllen, ergeben sich dann, wenn der Vernetzer 0,01% bis 5 % mol der vierten Komponente (K4) enthält.

Das bereits zu genau zwei Komponenten Gesagte gilt auch hier analog: Die Prozentanteile jeder der genau drei, vier oder genau fünf Komponenten können so gewählt werden, dass sie in ihrer Gesamtsumme nicht über 100 Gew.-% hinausgehen. Anders ausgedrückt bedeutet dies, dass eben genau drei oder genau vier oder genau fünf Komponenten im Vernetzer vorhanden sind.

Unabhängig von den genannten Alternativen, also z.B. ob der Vernetzer aus genau zwei, drei, genau vier oder genau fünf oder mehr Komponenten hergestellt ist oder solche umfasst, könnte jede der genannten Komponenten ihrerseits aus weiteren Unterkomponenten bestehen. Bevorzugt jedoch sind die erfindungsgemäßen Stoffe selbst die Komponenten.

Wenn gemäß der Erfindung von "wenigstens" einer Komponente des Vernetzer gesprochen wird, dann ist damit einerseits genau eine oder mehr als eine solche, also mehrere entsprechende Komponenten gemeint.

Die erfindungsgemäßen Komponenten können z.B. gemäß dem Vernetzer zugegeben werden, bevor sie mit dem Präpolymer reagiert werden.

Mit dem Begriff "höchstens" bezogen auf einen bestimmten Prozentsatz einer Komponente ist gemeint, dass der Anteil zumindest > 0 %, also z.B. 0,01 % oder mehr, jedoch maximal den bestimmten Prozentsatz umfasst. Ist z.B. die Rede von "höchstens 15 %", so ist damit stets das Intervall zwischen > 0 %, also z.B. größer. 0,01 % und (genau) 15 % gemeint. Somit sind in jedem Fall alle drei, vier, fünf oder mehr Komponenten gemäß der Erfindung stets und einzeln in dem Vernetzer vertreten. Andererseits, wenn davon die Rede ist, das "zumindest" z.B. 20% einer Komponente vorhanden sind, dann sind also 20 und mehr, also bis zu 100% der Komponente gemeint. Die genannten Begriffe sind um die entsprechende Mol- oder Gewichtsangabe zu ergänzen.

Wenn im Sinne der Erfindung von aliphatischen Aminen die Rede ist, dann können darunter primäre aliphatische Amine, sekundäre aliphatische Amine oder tertiäre aliphatische Amine gemeint sein. In einer bevorzugten Ausführungsform sind die aliphatischen Amine jedoch primäre aliphatische Amine, da sich hiermit die erfindungsgemäßen Vorteile am besten einstellen. Dies gilt analog für aromatische Amine als auch für (aromatische) Diamine.

Die Erfindung betrifft auch eine Schuhpresswalze für eine Schuhpresse zur Entwässerung einer Faserstoffbahn, wobei die Presswalze wenigstens einen erfindungsgemäßen Pressmantel aufweist.

Auch betrifft die Erfindung eine Schuhpresse zur Entwässerung einer Faserstoffbahn, bevorzugt einer Papier-, Karton-, Tissue- oder Zellstoffbahn, umfassend eine Schuhpresswalze und eine Gegenwalze, die zusammen einen Nip ausbilden oder begrenzen, wobei die Schuhpresswalze einen umlaufenden Pressmantel umfasst, wobei der Pressmantel gemäß der Erfindung ausgebildet ist.

Schließlich betrifft die Erfindung die Verwendung eines erfindungsgemäßen Pressmantels für eine Schuhpresse zur Entwässerung einer Faserstoffbahn, bevorzugt einer Papier-, Karton-, Tissue- oder Zellstoffbahn.

Die Erfindung wird nachfolgend unter Bezugnahme auf die Zeichnungen ohne Einschränkung der Allgemeinheit näher erläutert. In den Zeichnungen zeigen:
- Fig. 1: eine teilgeschnittene, schematische Seitenansicht einer Schuhpresse mit einem Pressmantel gemäß eines Ausführungsbeispiels der vorliegenden Erfindung.
- Fig. 2: eine schematische, teilgeschnittene und vergrößerte Darstellung eines Ausführungsbeispiels eines Pressmantels in einen Querschnitt durch dessen Längsachse gesehen;
- Fig. 3: eine stark schematisierte Darstellung auf eine Vorrichtung zur Herstellung des Pressmantels in einer Seitenansicht.

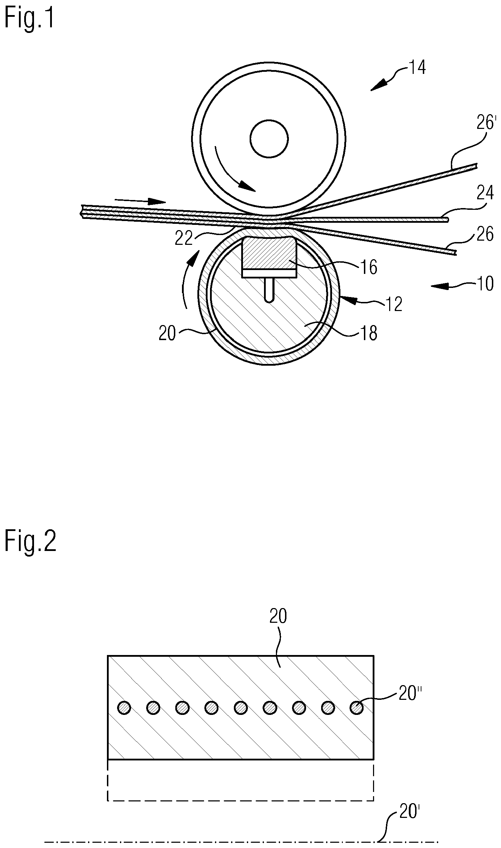

In der Fig. 1 ist eine Schuhpresse 10 dargestellt, welche vorliegend eine erfindungsgemäße Schuhpresswalze 12 und eine Gegenwalze 14 umfasst. Schuhpresswalze 12 und Gegenwalze 14 sind hinsichtlich ihrer Längsachsen parallel zueinander angeordnet. Sie bilden zusammen einen Nip 22 aus oder begrenzen einen solchen.

Während die Gegenwalze 14 hier aus einer um ihre Längsachse rotierenden zylindrisch ausgestalteten Walze besteht, ist die Schuhpresswalze 12 aus einem Schuh 16, einem diesen tragenden stehenden Joch 18 und einem Pressmantel 20 zusammengesetzt. Schuh 16 und Joch 18 sind in Bezug auf die Gegenwalze 14 bzw. den Pressmantel 20 feststehend angeordnet. Das bedeutet, sie rotieren nicht. Dabei wird der Schuh 16 durch das Joch 18 abgestützt und über nicht dargestellte, hydraulische Presselemente an die radial innerste Oberfläche des relativ dazu umlaufenden Pressmantels 20 angepresst. Der Pressmantel 20, der Schuh 16 und Joch 18 in Umfangsrichtung umgibt, dreht sich dabei um seine Längsachse im entgegengesetzten Drehsinn zu der Gegenwalze 14. Aufgrund der konkaven Ausgestaltung des Schuhs 16 an seiner der Gegenwalze 14 zugewandten Seite ergibt sich ein vergleichsweise langer Nip 22.

Die Schuhpresse 10 eignet sich insbesondere zur Entwässerung von Faserstoffbahnen 24. Bei dem Betrieb der Schuhpresse wird eine Faserstoffbahn 24 mit einem oder zwei Pressfilzen 26, 26' durch den Pressspalt 22 geführt. Im vorliegenden Fall sind es genau zwei Pressfilze 26, 26', die die Faserstoffbahn 24 sandwichartig zwischen sich aufnehmen. Beim Durchgang durch den Nip 22 wird im Nip 22 auf die Faserstoffbahn 24 durch die Pressfilze 26, 26' mittelbar ein Druck ausgeübt. Dies geschieht dadurch, dass die radial äußerste Oberfläche der Gegenwalze 14 einerseits und die radial äußerste Oberfläche des Pressmantels 20 unmittelbar mit den entsprechenden Pressfilzen 26, 26' in Kontakt kommen. Die aus der Faserstoffbahn 24 austretende Flüssigkeit wird von dem bzw. den Pressfilzen 26, 26' und etwaigen in der Pressmanteloberfläche vorgesehen Vertiefungen (nicht dargestellt) vorübergehend aufgenommen. Nach dem Verlassen des Nips 22 wird die von den Vertiefungen des Pressmantels 20 aufgenommene Flüssigkeit abgeschleudert, bevor der Pressmantel 20 erneut in den Presspalt 22 eintritt. Zudem kann das von dem Pressfilz 26, 26' aufgenommene Wasser nach dem Verlassen des Pressspalts 22 mit Saugelementen entfernt werden.

Fig. 2 zeigt in einem nicht maßstäblichen, teilweise dargestellten Querschnitt entlang der Längsachse 20' des fertigen Pressmantels 20 eine mögliche Ausführungsform der Erfindung. Zu sehen ist die (genau) eine Polymerschicht 20.1 des Pressmantels 20. Wie durch die gestrichelten Linien angedeutet, wäre es denkbar, dass der Pressmantel 20 aus mehreren, radial übereinander angeordneten Polymerschichten besteht. Z.B. wären genau zwei Polymerschichten denkbar, eine radial innere (gestrichelt dargestellte) und eine radial äußerste Polymerschicht (in ausgezogenen Linien dargestellt). Die mehreren Polymerschichten könnten dann erfindungsgemäß hergestellt sein.

Vorliegend ist in die wenigstens einen Polymerschicht 20.1 eine Verstärkungsstruktur 20" eingebettet. Dies ist durch die schraffierten Kreise, die textile Flächen- bzw. Liniengebilde wie Fasern sein können, angedeutet. Die Verstärkungsstruktur 20" ist vollständig in die Polymerschicht 20.1 eingebettet. Das bedeutet, dass sich die Verstärkungsstruktur 20" nicht über die Begrenzungen der Polymerschicht 20.1, in die sie eingebettet ist, hinauserstreckt.

Fig. 3 zeigt in einer stark schematisierten Seitenansicht eine Vorrichtung zur Herstellung eines erfindungsgemäßen Pressmantels 20. Die Vorrichtung ist derart eingerichtet, dass sie das Verfahren zur Herstellung des Pressmantels 20 ausübt. Die Vorrichtung weist vorliegend genau einen zylindrischen Wickeldorn 4, wobei hier auf dessen radial äußerste Mantelfläche z.B. ein eine Verstärkungsstruktur 20" aus einem Ausgangsmaterial 20'" spiralig aufgebracht wird.

Die Darstellung zeigt ein Anfangsstadium des Herstellungsverfahrens. Im vorliegenden Fall ist dazu das eine Ende des Ausgangsmaterials 20"' auf einem Polymer, das auf dem Außenumfang des Wickeldorns 4 angeordnet ist, befestigt. Abgesehen von der gezeigten schematischen Darstellung könnte das eine Ende des Ausgangsmaterials 20'" auch direkt, also unmittelbar auf dem Wickeldorn 4 aufliegen oder aufgebracht werden, ohne dass anfangs zwischen Ausgangsmaterial 20'" und Wickeldorn 4 ein Polymer vorgesehen ist. Das Ausgangsmaterial 20'" kann dabei ein textiles Flächengebilde oder Liniengebilde sein.

Der Wickeldorn 4 ist um seine Längsachse 20', die der Längsachse des herzustellenden Pressmantels entspricht, rotierbar gelagert. Längsachse 20' verläuft hier senkrecht in die Zeichenebene hinein. Über eine Leitung 5 wird durch einen Gießdüse 6 ein Gießmaterial, wie gießfähiges, aushärtbares elastomeres Polymer, z.B. Polyurethan, von oben auf die radial äußerste Mantelfläche des Wickeldorns 4 bzw. auf das Ausgangsmaterial 20'" gegeben. Ein solches Gießmaterial kann z.B. hinsichtlich seiner Topfzeit und Viskosität derart gewählt werden, dass es beim Gießen nicht vom Wickeldorn 4 heruntertropft. Währenddessen wird der Wickeldorn 4 in Pfeilrichtung um dessen Längsachse gedreht. Gleichzeitig mit dieser Drehung wird die Gießdüse 6 über eine geeignete, in Fig. 3 nicht weiter dargestellte Führung parallel zur Längsachse 20' entlang dieser relativ an dem Wickeldorn 4 entlanggeführt. Gleichzeitig mit dem Aufgießen des Gießmaterials wird das Ausgangsmaterial 20"' abgerollt und auf den sich drehenden Wickeldorn 4 zu Wendeln gewickelt. Dabei kann das Gießmaterial durch das Ausgangsmaterial 20'" hindurch bis auf den Wickeldorn 4 gelangen. Das Polymer bildet in diesem Beispiel nach dem Schritt des Aushärtens eine erste, hier radial innerste und bevorzugt elastomere Polymerschicht 20.1 des Pressmantels, wovon in Fig. 3 nur ein Teil gezeigt ist.

Das aus der Gießdüse 6 austretende Gießmaterial ist ein Gemisch aus einem Präpolymer und einem Vernetzer. Ersteres wird aus einem nicht gezeigten Präpolymer-Behälter bereitgestellt, in dem es gespeichert oder angerührt wird.

Der Vernetzer kann in einem Vernetzer-Behälter bereitgestellt werden. Der Vernetzer umfasst zumindest eine erfindungsgemäße erste Komponente K1 und eine erfindungsgemäße zweite Komponente K2. Der Vernetzer kann aber auch eine erfindungsgemäße dritte Komponente K3 umfassend wenigstens ein Polyol und/oder auch eine erfindungsgemäße vierte Komponente, wie einen Katalysator umfassen. Auch eine fünfte oder weitere Komponenten wären grundsätzlich denkbar. Der Vernetzer mit seinen entsprechenden Komponenten kann direkt im Vernetzer-Behälter angerührt werden. Denkbar ist, jedoch auch, dass die Vorrichtung für jede der Komponenten einen entsprechenden Einzelbehälter umfasst, der über nicht dargestellte Leitungen strömungsleitend mit dem Vernetzer-Behälter verbunden ist, um den erfindungsgemäßen Vernetzer im Vernetzer-Behälter herzustellen.

Präpolymer-Behälter und Vernetzer-Behälter sind der Vorrichtung zur Herstellung eines Pressmantels 20 zugeordnet. Sie sind über ebenfalls nicht dargestellte Leitungen strömungsleitend mit einer der Gießdüse 6 in Strömungsrichtung vorgeschalteten Mischkammer (nicht dargestellt) verbunden. Das Präpolymer-Vernetzer-Gemisch wird also stromauf und außerhalb der Gießdüse 6 hergestellt, also in der Mischkammer gemischt. Unabhängig von der Herstellung des Gemisches wird dieses dann auf die Oberfläche des Wickeldorns 4 zum Bilden der zumindest einen Polymerschicht 20.1 des Pressmantels 20 aufgebracht.

Mittels eines solchen kontinuierlichen Gießvorgangs, der auch als Rotationsguss bekannt ist, wird also nach und nach über die Breite des Wickeldorns 4 ein endloser, um dessen Längsachse 20' in sich geschlossener zylinderrohrförmiger Pressmantel 20 hergestellt, dessen Innenumfang im Wesentlichen dem Außenumfang des Wickeldorns 4 entspricht.

Grundsätzlich wäre es denkbar das Ausgangsmaterial 20'" auf mehr als den einen in Fig. 3 gezeigten Wickeldorn 4 zu wickeln. Beispielsweise könnten zwei Wickeldorne vorgesehen sein, die parallel hinsichtlich ihrer Längsachsen mit Abstand zueinander angeordnet sein könnten. Alternativ wäre es auch denkbar, das Polymer auch auf die radial innere Mantelfläche des Wickeldorns 4, z.B. nach Art des Schleuderns, aufzubringen.

Unabhängig von der angesprochenen Ausführungsform wird der fertige Pressmantel 20 schließlich von dem wenigstens einen Wickeldorn 4 abgenommen.

Wie in den Figuren dargestellt, ist der Pressmantel 20 gemäß der Erfindung ausgeführt. Das bedeutet, dass die dort gezeigte einzige Polymerschicht (teilweise oder vollständig) aus einem Polyurethan hergestellt ist. Der Vernetzer umfasst z.B. die eingangs genannten Komponenten. Es kann aber auch weitere, dem Fachmann bekannte Komponenten aufweisen.

Mittels der Erfindung wird eine besonders hohe Stabilität des Pressmantels 20 hinsichtlich der mechanischen und dynamischen Eigenschaften wie Stabilität, Oberflächenhärte, Beständigkeit gegen Druck, Temperatur und Hydrolyse sowie einer geringen Quellung und führen im Betrieb zu einer verlängerten Lebensdauer desselben erzielt. Gleichzeitig können mittels des in den Fig. beschriebenen Rotationsgussverfahrens nahezu blasenfreie Pressmäntel hergestellt werden, die bis zu 40 mm dicke Polymerschichten in einem Beschichtungsdurchgang ermöglichen. Obwohl dies nicht in den Figuren dargestellt ist, könnte die Verstärkungsstruktur 20" der wenigstens einen Polymerschicht 20.1, 20.2 auch aus mehreren, in Radialrichtung übereinander gelegten, je in Längsachsenrichtung und in Umfangsrichtung des Pressmantels 20 verlaufenden Ausgangsmaterialien 20'" aufgebaut sein.

## Patentansprüche

1. Pressmantel in Form eines endloses Bandes bzw. Schlauches für eine Schuhpresswalze (12) umfassend wenigstens eine Polymerschicht, wobei die Polymerschicht ein Polyurethan enthält oder aus diesem hergestellt ist, wobei das Polyurethan gebildet ist aus einem Präpolymer und einem Vernetzer, und das Präpolymer ein Reaktionsprodukt ist aus 1,4-Phenylendiisocyanat (PPDI) und wenigstens einem Polyol, **dadurch gekennzeichnet, dass** das Polyol Caprolacton und Carbonat, wie ein Polycaprolacton-Polycarbonat-Polyol enthält

2. Pressmantel (20) nach Anspruch 1, **dadurch gekennzeichnet, dass** das Polycaprolacton-Polycarbonat-Polyol ein Copolymer darstellt, das zumindest Caprolacton- und Carbonat-Monomereinheiten enthält.

3. Pressmantel (20) nach Anspruch 1 oder 2, **dadurch gekennzeichnet, dass** der Vernetzer wenigstens zwei Komponenten umfasst, nämlich:
eine erste Komponente umfassend wenigstens ein Diamin
eine zweite Komponente aus der Gruppe der Kohlensäureester

4. Pressmantel (20) nach Anspruch 3, **dadurch gekennzeichnet, dass** die erste Komponente ausgewählt ist aus 4,4'-Methylenebis(3-Chloro-2,6-Diethylaniline) (MCDEA), 4,4'-Diaminodicyclohexylmethan oder Mischungen daraus.

5. Pressmantel (20) nach Anspruch 3 oder 4, **dadurch gekennzeichnet, dass** der Vernetzer 25 Gew.-% bis 95 Gew.-%, bevorzugt 30 Gew.-% bis 70 Gew.-% der ersten Komponente enthält

6. Pressmantel (20) nach einem der Ansprüche 3 bis 5, **dadurch gekennzeichnet, dass** die zweite Komponente Propylencarbonat ist oder umfasst

7. Pressmantel (20) nach einem der Ansprüche 3 bis 6, **dadurch gekennzeichnet, dass** der Vernetzer 1 Gew.-% bis 25 Gew.-% der zweiten Komponente enthält.

8. Pressmantel (20) nach einem der Ansprüche 3 bis 7, **dadurch gekennzeichnet, dass** der Vernetzer eine dritte Komponente umfasst und die dritte Komponente ausgewählt ist aus wenigstens einem Polyol, bevorzugt bifunktionellem Polyol, dessen Molekulargewicht bevorzugt 1.000 bis 4.000 g/mol beträgt, wie Polyesterpolyol, insbesondere Polycaprolactonpolyol; Polyetherpolyole, insbesondere Polytetramethylenetherglycol (PTMEG), Polypropylenglycol (PPG), Polyethylenglycol (PEG) Polyhexamethylenetherglycol, Polycarbonatpolyol, Polyethercarbonatpolyol, Polybutadienepolyol, Perfluoropolyetherpolyol, Silikonpolyol oder Mischungen daraus.

9. Pressmantel (20) nach Anspruch 8, **dadurch gekennzeichnet, dass** der Vernetzer höchstens 65 Gew.-% der dritten Komponente enthält

10. Pressmantel (20) nach einem der Ansprüche 8 bis 9, **dadurch gekennzeichnet, dass** der Vernetzer eine vierte Komponente, umfassend einen Katalysator, aufweist und die vierte Komponente ausgewählt ist aus tertiären Aminen, wie 1,4-Diazabicyclo(2.2.2)octan (DABCO), Triethylamin, Metallverbindungen, organometallischen Verbindungen - z.B. umfassend oder enthaltend Bismuth, wie Bismuth-Neodecanoat, Quecksilber, Aluminium, Zirconium, Eisen, Kalzium, Natrium, Kalium, Blei, Zinn, Titan - oder Mischungen aus den vorgenannten Stoffen.

11. Pressmantel (20) nach Anspruch 10, **dadurch gekennzeichnet, dass** der Vernetzer höchstens 5 Gew.-% der vierten Komponente enthält

12. Pressmantel (20) nach einem der Ansprüche 1 bis 11, **dadurch gekennzeichnet, dass** die wenigstens eine Polymerschicht die radial äußerste Polymerschicht des Pressmantels (20) ist.

13. Pressmantel (20) nach einem der Ansprüche 1 bis 12, **dadurch gekennzeichnet, dass** in die wenigstens eine Polymerschicht eine Verstärkungsstruktur (20") eingebettet ist.

14. Pressmantel (20) nach einem der Ansprüche 1 bis 13, **dadurch gekennzeichnet, dass** das Polyol des Präpolymers zusätzlich ein Polyether-Polycarbonat-Polyol, ein Polycarbonatpolyol, ein Polytetramethylenetherglycol (PTMEG) oder Mischungen daraus enthält.

15. Schuhpresswalze (12) für eine Schuhpresse (10) zur Behandlung einer Faserstoffbahn (24), **dadurch gekennzeichnet, dass** die Schuhpresswalze wenigstens einen Pressmantel (20) nach einem der vorstehenden Ansprüche aufweist.

16. Schuhpresse (10) zur Behandlung einer Faserstoffbahn (24), bevorzugt einer Papier-, Karton-, Tissue- oder Zellstoffbahn, umfassend eine Schuhpresswalze (12) und eine Gegenwalze (14), die zusammen einen Nip (22) ausbilden oder begrenzen, wobei die Schuhpresswalze einen umlaufenden Pressmantel umfasst, **dadurch gekennzeichnet, dass** der Pressmantel (20) nach einem der Ansprüche 1 bis 14 ausgebildet ist.

17. Verwendung eines Pressmantels (20) nach einem der Ansprüche 1 bis 14 für eine Schuhpresse (10) zur Behandlung einer Faserstoffbahn (24), bevorzugt einer Papier-, Karton-, Tissue- oder Zellstoffbahn.

## Claims

1. Press cover in the form of a continuous belt or tube for a shoe press roll (12), comprising at least one polymer layer, wherein the polymer layer comprises or has been produced from a polyurethane, wherein the polyurethane has been formed from a prepolymer and a crosslinker, and the prepolymer is a reaction product of phenylene 1,4-diisocyanate (PPDI) and at least one polyol, **characterized in that** the polyol comprises caprolactone and carbonate, such as a polycaprolactone polycarbonate polyol.

2. Press cover (20) according to Claim 1, **characterized in that** the polycaprolactone polycarbonate polyol is a copolymer containing at least caprolactone and carbonate monomer units.

3. Press cover (20) according to Claim 1 or 2, **characterized in that** the crosslinker comprises at least two components, as follows:
a first component comprising at least one diamine,
a second component from the group of the carbonic esters.

4. Press cover (20) according to Claim 3, **characterized in that** the first component is selected from 4,4'-methylenebis(3-chloro-2,6-diethylaniline) (MCDEA), 4,4'-diaminodicyclohexylmethane or mixtures thereof.

5. Press cover (20) according to Claim 3 or 4, **characterized in that** the crosslinker contains 25% by weight to 95% by weight, preferably 30% by weight to 70% by weight, of the first component.

6. Press cover (20) according to any of Claims 3 to 5, **characterized in that** the second component is or comprises propylene carbonate.

7. Press cover (20) according to any of Claims 3 to 6, **characterized in that** the crosslinker contains 1% by weight to 25% by weight of the second component.

8. Press cover (20) according to any of Claims 3 to 7, **characterized in that** the crosslinker comprises a third component and the third component is selected from at least one polyol, preferably bifunctional polyol, preferably having a molecular weight of 1000 to 4000 g/mol, such as polyester polyol, especially polycaprolactone polyol; polyether polyols, especially polytetramethylene ether glycol (PTMEG), polypropylene glycol (PPG), polyethylene glycol (PEG), polyhexamethylene ether glycol, polycarbonate polyol, polyether carbonate polyol, polybutadiene polyol, perfluoropolyether polyol, silicone polyol or mixtures thereof.

9. Press cover (20) according to Claim 8, **characterized in that** the crosslinker contains not more than 65% by weight of the third component.

10. Press cover (20) according to either of Claims 8 and 9, **characterized in that** the crosslinker includes a fourth component comprising a catalyst, and the fourth component is selected from tertiary amines, such as 1,4-diazabicyclo(2.2.2)octane (DABCO), triethylamine, metal compounds, organometallic compounds - for example including or containing bismuth, such as bismuth neodecanoate, mercury, aluminum, zirconium, iron, calcium, sodium, potassium, lead, tin, titanium - or mixtures of the aforementioned substances.

11. Press cover (20) according to Claim 10, **characterized in that** the crosslinker contains not more than 5% by weight of the fourth component.

12. Press cover (20) according to any of Claims 1 to 11, **characterized in that** the at least one polymer layer is the radially outermost polymer layer of the press cover (20).

13. Press cover (20) according to any of Claims 1 to 12, **characterized in that** a reinforcing structure (20'') has been embedded into the at least one polymer layer.

14. Press cover (20) according to any of Claims 1 to 13, **characterized in that** the polyol in the prepolymer additionally comprises a polyether polycarbonate polyol, a polycarbonate polyol, a polytetramethylene ether glycol (PTMEG) or mixtures thereof.

15. Shoe press roll (12) for a shoe press (10) for treatment of a fibrous material web (24), **characterized in that** the shoe press roll includes at least one press cover (20) according to any of the preceding claims.

16. Shoe press (10) for treatment of a fibrous material web (24), preferably a paper, cardboard, tissue or pulp web, comprising a shoe press roll (12) and an opposing roll (14) that together form or bound a nip (22), where the shoe press roll comprises a circumferential press cover, **characterized in that** the press cover (20) takes the form according to any of Claims 1 to 14.

17. Use of a press cover (20) according to any of Claims 1 to 14 for a shoe press (10) for treatment of a fibrous material web (24), preferably a paper, cardboard, tissue or pulp web.

## Revendications

1. Chemise de presse sous la forme d'une courroie sans fin ou d'un tube pour un rouleau de presse à sabot (12), comprenant au moins une couche de polymère, la couche de polymère contenant un polyuréthane ou étant préparée à partir de celui-ci, le polyuréthane étant formé à partir d'un prépolymère et d'un agent de réticulation, et le prépolymère étant un produit de réaction du diisocyanate de 1,4-phénylène (PPDI) et d'au moins un polyol, **caractérisée en ce que** le polyol contient une caprolactone et un carbonate, comme un polycaprolactone-polycarbonate-polyol.

2. Chemise de presse (20) selon la revendication 1, **caractérisée en ce que** le polycaprolactone-polycarbonate-polyol représente un copolymère qui contient au moins des motifs monomériques de type caprolactone et carbonate.

3. Chemise de presse (20) selon la revendication 1 ou 2, **caractérisée en ce que** l'agent de réticulation comprend au moins deux composants, à savoir :
un premier composant comprenant au moins une diamine,
un deuxième composant du groupe des esters d'acide carboxylique.

4. Chemise de presse (20) selon la revendication 3, **caractérisée en ce que** le premier composant est choisi parmi la 4,4'-méthylènebis(3-chloro-2,6-diéthylaniline) (MCDEA), le 4,4'-diaminodicyclohexylméthane et des mélanges correspondants.

5. Chemise de presse (20) selon la revendication 3 ou 4, **caractérisée en ce que** l'agent de réticulation contient 25 % en poids à 95 % en poids, préférablement 30 % en poids à 70 % en poids du premier composant.

6. Chemise de presse (20) selon l'une quelconque des revendications 3 à 5, **caractérisée en ce que** le deuxième composant est ou comprend du carbonate de propylène.

7. Chemise de presse (20) selon l'une quelconque des revendications 3 à 6, **caractérisée en ce que** l'agent de réticulation contient 1 % en poids à 25 % en poids du deuxième composant.

8. Chemise de presse (20) selon l'une quelconque des revendications 3 à 7, **caractérisée en ce que** l'agent de réticulation comprend un troisième composant et le troisième composant est choisi parmi au moins un polyol, préférablement un polyol difonctionnel, dont le poids moléculaire est préférablement de 1 000 à 4 000 g/mole, comme un polyesterpolyol, en particulier un polycaprolactonepolyol ; des polyétherpolyols, en particulier un polytétraméthylèneétherglycol (PTMEG), un polypropylèneglycol (PPG), un polyéthylèneglycol (PEG), un polyhexaméthylèneétherglycol, un polycarbonatepolyol, un polyéthercarbonatepolyol, un polybutadiènepolyol, un perfluoropolyétherpolyol, un siliconepolyol ou des mélanges correspondants.

9. Chemise de presse (20) selon la revendication 8, **caractérisée en ce que** l'agent de réticulation contient au plus 65 % en poids du troisième composant.

10. Chemise de presse (20) selon l'une quelconque des revendications 8 et 9, **caractérisée en ce que** l'agent de réticulation présente un quatrième composant, comprenant un catalyseur, et le quatrième composant est choisi parmi des amines tertiaires, comme le 1,4-diazabicyclo[2.2.2]octane (DABCO), la triéthylamine, des composés métalliques, des composés organométalliques - par ex. comprenant ou contenant du bismuth, comme le néodécanoate de bismuth, du mercure, de l'aluminium, du zirconium, du fer, du calcium, du sodium, du potassium, du plomb, de l'étain, du titane - et des mélanges des matières mentionnées précédemment.

11. Chemise de presse (20) selon la revendication 10, **caractérisée en ce que** l'agent de réticulation contient au plus 5 % en poids du quatrième composant.

12. Chemise de presse (20) selon l'une quelconque des revendications 1 à 11, **caractérisée en ce que** l'au moins une couche de polymère est la couche de polymère radialement la plus à l'extérieur de la chemise de presse (20).

13. Chemise de presse (20) selon l'une quelconque des revendications 1 à 12, **caractérisée en ce qu'**une structure de renforcement (20'') est incorporée dans l'au moins une couche de polymère.

14. Chemise de presse (20) selon l'une quelconque des revendications 1 à 13, **caractérisée en ce que** le polyol du prépolymère contient de plus un polyéther-polycarbonate-polyol, un polycarbonatepolyol, un polytétraméthylèneétherglycol (PTMEG) ou des mélanges correspondants.

15. Rouleau de presse à sabot (12) pour une presse à sabot (10) pour le traitement d'une bande fibreuse (24), **caractérisé en ce que** le rouleau de presse à sabot présente au moins une chemise de presse (20) selon l'une quelconque des revendications précédentes.

16. Presse à sabot (10) pour le traitement d'une bande fibreuse (24), préférablement d'une bande de papier, de carton, de tissu ou de cellulose, comprenant un rouleau de presse à sabot (12) et un contre-rouleau (14), qui forment ou délimitent ensemble un pinçage (22), le rouleau de presse à sabot comprenant une chemise de presse périphérique, **caractérisée en ce que** la chemise de presse (20) est formée selon l'une quelconque des revendications 1 à 14.

17. Utilisation d'une chemise de presse (20) selon l'une quelconque des revendications 1 à 14 pour une presse à sabot (10) pour le traitement d'une bande fibreuse (24), préférablement d'une bande de papier, de carton, de tissu ou de cellulose.
